# EUROPEAN PATENT APPLICATION

(11) **EP 1 491 376 A2**
(43) Date of publication of application: **29.12.2004**
(21) Application number: 03425449.0
(22) Date of filing: 08.07.2003
(51) Int. Cl.: B60J 7/06

(54) **Carriage and guide for movable coverings**

(30) Priority: 27.06.2003 IT MI20031319
(71) Applicant: Dona', Severino, 20090 Caleppio di Settala, Milano (IT)
(72) Inventor: Dona', Severino, 20090 Caleppio di Settala, Milano (IT)
(74) Representative: Pizzoli, Antonio

(57) **Abstract**

Carriage (3) which can be fixed at the ends of arches (4) supporting a tarpaulin (5) of a movable covering and is provided with at least two wheels (8, 9) for running in a guide (1) of the movable covering, thereby rotating around axles substantially horizontal and parallel to each other, said wheels (8, 9) being arranged in an offset manner and being fixed in a rotating manner to two longitudinal plates (10, 11) which are arranged along substantially vertical parallel planes and are mutually connected by a transversal plate (12), so that by placing side by side more carriages (3), the first (8) and the second (9) wheel of a carriage are arranged beside the second wheel (9) of an adjacent carriage and beside the first wheel (8) of the other adjacent carriage, respectively. The present invention also relates to a guide and a movable covering which comprises a plurality of said carriages and/or guides.

## Description

The present invention relates to a carriage and a guide for movable coverings, in particular the movable coverings employing a bellows tarpaulin for covering the body of the trucks. The present invention also relates to a movable covering comprising a plurality of said carriages and/or guides.

EP 677410 discloses a guide for movable coverings in which carriages fixed at the ends of arches supporting a tarpaulin can run. Said carriages are provided with a pair of wheels aligned on a same plane for running in a U-shaped rail arranged in the middle of the guide. However, the depth of the carriages results greater than the depth of the arches, so that it is not possible to place side by side in a tight manner all the arches when the covering is open and the tarpaulin is folded like a bellow, so that the access from the top is relatively limited.

It is therefore an object of the present invention to provide a movable covering which is free from said disadvantage, i.e. a covering which results more compact than the known coverings when it is open. Said object is achieved with a carriage, a guide and a movable covering, the main features of which are disclosed in claims 1, 7 and 15, respectively, while other features are disclosed in the remaining claims.

Thanks to its particular structure and the offset wheels, the carriage according to the present invention can be grouped together with other similar carriages, thereby occupying a space which is substantially the half of the space occupied by the known carriages, so that the arches can be places side by side in a tight manner when the covering is open. Therefore, the covering according to the present invention, when it is open, occupies a space which is substantially the half of the space occupied by the known coverings, so as to improve the access from the top.

According to a particular aspect of the invention, the carriage can be provided with a lower notch and/or a horizontal wheel which improve its stability during the running of the guide, which comprise a pair of tracks and other structural arrangements, preferably carried out by means of a single section bar made of extruded aluminum.

In particular, the guide according to the present invention is closed on all sides, except for a lateral opening for the connection to the arches, so as to avoid that dust or foreign bodies gather on the tracks for the carriages. Thanks to this lateral opening and to the particular shape of the guide, it is also easy to clean its inner parts, so as to simplify the maintenance of the whole movable covering.

Further advantages and features of the carriage, the guide and the movable covering according to the present invention will become clear to those skilled in the art from the following detailed and non-limiting description of an embodiment thereof, with reference to the attached drawings, wherein:
- figure 1 shows a cross-sectional front view of the movable covering;
- figure 2 shows a top view cross-sectioned according to plane II-II of the movable covering of figure 1;
- figure 3 shows a top view of a carriage of the movable covering of figure 1;
- figure 4 shows a front view of the carriage of figure 3; and
- figure 5 shows a cross-sectional front view of the guide of the movable covering of figure 1.

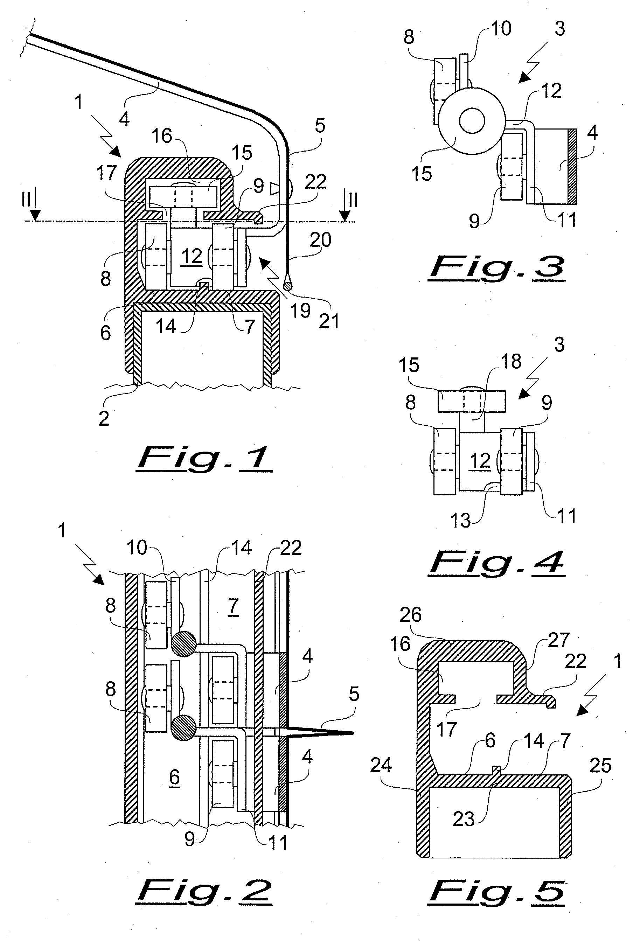

Referring to figures 1 to 4, it is seen that the movable covering according to the present invention comprises in a known way at least one pair of guides 1 suitable for being fixed in a parallel manner at the two sides of an area to be covered, for example at the upper edges of a body 2 for trucks. A plurality of carriages 3 fixed at the two ends of arches 4 supporting a tarpaulin 5 can run along guides 1 so as to extend or fold like a bellow this tarpaulin for closing or opening, respectively, the movable covering.

According to the invention, guide 1 comprises a pair of parallel tracks 6, 7 on which at least two wheels 8, 9 of each carriage 3 can run. Wheels 8, 9 rotate in a known way around substantially horizontal and mutually parallel axles, but they are not aligned to each other, since they are suitably arranged in an offset manner on tracks 6 and 7. Carriage 3 comprises two longitudinal plates 10, 11 which are substantially the same, are arranged along substantially vertical and mutually parallel planes and support the axles of wheels 8, 9. A transversal plate 12 mutually connects the adjoining edges of the longitudinal plates 10, 11, so that the mutually joined plates 10, 11 and 12, seen from above, have a triangular wave profile. The ends of arches 4 are fixed to the longitudinal plates 11 turned toward the outside of guides 1, while the depth of plates 10, 11 is substantially equal to the depth of arches 4, so that carriages 3, when grouped together, occupy a total space substantially equal to the depth of arches 4, which thus result arranged side by side as in figure 2. Therefore, when carriages 3 are grouped together, wheels 8 and 9 of a carriage are arranged beside wheel 9 of an adjacent carriage and beside wheel 8 of the other adjacent carriage, respectively.

The lower edge of the transversal plate 12 preferably comprises at least one notch 13 in which a longitudinal protrusion 14 projecting upwards between tracks 6 and 7 of guide 1 can be arranged. Carriages 3 further comprise at least one third wheel 15 which can rotate around a substantially vertical axle in a rail 16 arranged in the upper portion of guide 1. Rail 16 of guide 1 is closed on all sides, except for a lower slit 17 for the axles 18 supporting wheels 15 of carriages 3. Thus, guide 1 encloses tracks 6, 7 and rail 16 so that carriages 3 are covered on all sides, except for a lateral opening 19 turned outwards for allowing the connection between carriages 3 and arches 4. For protecting opening 19 from dust or foreign bodies, tarpaulin 5 is prolonged downwards so that a lower border 20 thereof, stretched by one or more weights 21, is arranged outside and beside opening 19. Furthermore, a longitudinal appendix 22 is fixed beside rail 16 of guide 1 and extends toward arches 4 for covering opening 19 from the top.

Referring to figure 5, it is seen that guide 1 is preferably carried out by extruding an aluminum section bar comprising a lower horizontal wall 23 which includes rails 6, 7 and the longitudinal protrusion 14, as well as a first vertical wall 24 and a second vertical wall 25 which extend under the horizontal wall 23 for containing an edge of body 2. The first vertical wall 24 also extends above wall 23 for closing tracks 6, 7 and rail 16 from the inner side. Guide 1 also comprises an upper horizontal wall 26 which closes from the top tracks 6, 7 and rail 16 and is arranged between the first vertical wall 24 and a third vertical wall 27 which closes rail 16 from the outer side. The longitudinal appendix 22 is finally joined to the lower edge of wall 27.

## Claims

1. Carriage (3) which can be fixed at the ends of arches (4) supporting a tarpaulin (5) of a movable covering and is provided with at least two wheels (8, 9) for running in a guide (1) of the movable covering, thereby rotating around axles substantially horizontal and parallel to each other, **characterized in that** said wheels (8, 9) are arranged in an offset manner and are fixed in a rotating manner to two longitudinal plates (10, 11) which are arranged along substantially vertical parallel planes and are mutually connected by a transversal plate (12), so that by placing side by side more carriages (3), the first (8) and the second (9) wheel of a carriage are arranged beside the second wheel (9) of an adjacent carriage and beside the first wheel (8) of the other adjacent carriage, respectively.

2. Carriage (3) according to claim 1, **characterized in that** the transversal plate (12) mutually connects the adjoining edges of the longitudinal plates (10, 11), so that these plates (10, 11, 12), joined to each other and seen from above, have a triangular wave profile.

3. Carriage (3) according to claim 1 or 2, **characterized in that** the ends of the arches (4) of the movable covering are fixed to the longitudinal plates (11) turned toward the outside of the guides (1) of the movable covering.

4. Carriage (3) according to one of the previous claims, **characterized in that** the depth of the longitudinal plates (10, 11) is substantially equal to the depth of the arches (4) of the movable covering.

5. Carriage (3) according to one of the previous claims, **characterized in that** the lower edge of the transversal plate (12) comprises a notch (13) suitable for containing a longitudinal protrusion (14) which projects upwards in the guide (1) of the movable covering.

6. Carriage (3) according to one of the previous claims, **characterized by** comprising a third wheel (15) which can rotate around a substantially vertical axle in the guide (1) of the movable covering.

7. Guide (1) for carriages (3) of a movable covering, **characterized by** comprising a lower horizontal wall (23) which includes a pair of tracks (6, 7) for the wheels (8, 9) of the carriages (3), a first vertical wall (24) which extends above the lower horizontal wall (23) for closing the tracks (6, 7) from one side, as well as an upper horizontal wall (26) arranged above the tracks (6, 7), so that the carriages (3) are covered on all sides, except for a lateral opening (19) for the arches (4) of the movable covering.

8. Guide (1) according to claim 7, **characterized in that** the lower horizontal wall (23) includes a longitudinal protrusion (14) which projects upwards between said tracks (6, 7).

9. Guide (1) according to claim 7 or 8, **characterized in that** its upper portion comprises a rail (16) for a wheel (15) of the carriages (3) which can rotate around a substantially vertical axle.

10. Guide (1) according to claim 9, **characterized in that** said rail (16) is closed on all sides, except for a lower slit (17).

11. Guide (1) according to one of claims 7 to 10, **characterized in that** the first vertical wall (24) and a second vertical wall (25) extend under the lower horizontal wall (23).

12. Guide (1) according to one of claims 7 to 11, **characterized in that** a longitudinal appendix (22) is arranged above the lateral opening (19).

13. Guide (1) according to claim 12, **characterized in that** a third vertical wall (27) is arranged between the upper horizontal wall (26) and the longitudinal appendix (22).

14. Guide (1) according to one of claims 7 to 13, **characterized by** being carried out with an extruded aluminum section bar.

15. Movable covering, **characterized by** comprising a plurality of carriages (3) according to one of claims 1 to 6, which can run along at least a pair of guides (1) according to one of claims 7 to 14 and are fixed at the two ends of arches (4) supporting a tarpaulin (5).

16. Movable covering according to claim 15, **characterized in that** the tarpaulin (5) is prolonged downwards so that a lower border (20) thereof is arranged outside and beside the lateral opening (19) of the guide (1).
